# EUROPÄISCHE PATENTSCHRIFT

(11) **EP 0 386 178 B1**
(45) Veröffentlichungstag und Bekanntmachung des Hinweises auf die Patenterteilung: **13.10.1993**
(21) Anmeldenummer: 89907653.3
(22) Anmeldetag: 19.07.1989
(51) Int. Cl.: A22C 13/00

(54) **STABILITÄTSHILFE BEI EINEM LABILEN OBJEKT, INSBESONDERE LEBENSMITTEL**
STABILIZING AID FOR UNSTABLE OBJECTS, IN PARTICULAR FOODSTUFFS
AUXILAIRE DE STABILISATION POUR OBJETS INSTABLES, NOTAMMENT DES PRODUITS ALIMENTAIRES

(30) Priorität: 30.08.1988 CH 3211/88
(43) Veröffentlichungstag der Anmeldung: 12.09.1990
(73) Patentinhaber: BALDAUF, Hanspeter, CH-8023 Zürich (CH)
(72) Erfinder: BALDAUF, Hanspeter, CH-8023 Zürich (CH)
(74) Vertreter: Feldmann, Clarence Paul
(86) Internationale Anmeldenummer: CH8900137
(87) Internationale Veröffentlichungsnummer: WO9001878

(56) Entgegenhaltungen:
- BE-A- 351 851
- BE-A- 363 989
- DE-B- 1 066 901
- FR-A- 831 115
- FR-A- 1 260 250
- GB-A- 1 040 770

## Beschreibung

Bei der Zubereitung lockerer Lebensmittel ist es üblich, zur Erhaltung derer Struktur und Gestalt dieses einzuschnüren. Gebräuchlich ist auch ein Einstecken von Stiften aus Holz, Kunststoff oder das Abbinden mit metallischen Clips.

Bei der Herstellung von Würsten ist es seit langem bekannt, Ersatzstoffe für die natürlichen Därme zu verwenden. So schlägt bereits die FR-A-1'260'250 vor, Wursthäute aus nichtwasserlöslichem Kunststoff zur Verbesserung der Wasserdampfdurchlässigkeit mit einem hydrophilen Zusatzmittel zu versehen. Als solche Zusatzmittel werden beispielsweise Pecto-Cellulosen oder Stärke verwendet.

Die DE-B-1'066'901 hingegen beschäftigt sich mit dem Anbringen von Fett- oder Speckschichten um eine Wurstmasse. In einer Ausführungsvariante wird vorgesehen, die Fett- oder Speckschicht auf einer Folie aus essbarem Material auszulegen und alles zusammen um die Wurstmasse zu applizieren. Für eine ausreichende Stabilität sorgt nicht diese essbare Folie, sondern ein äusserer die Wurst umhüllender Darm.
Diese Anwendungen von derartigen essbaren Materialien beschränkt sich vorwiegend auf den industriellen Bereich der Lebensmittelherstellung.
Essbare Stabilitätshilfen, welche zur Verwendung bei der Lebensmitttelzubereitung im Haushalt und im Gastgewerbe geeignet sind und sich bei einer vorgegebenen Temperatur während des Koch-, Dampf- oder Bratvorganges auflösen, sind bisher nicht bekannt geworden.

Bisher hat man sich beispielsweise bei der Herstellung von gerolltem Fleisch zu Rollbraten oder Rollschinken oder bei Cordon-bleus und ähnlichen Produkten mit Stabilitätshilfen aus künstlichen oder natürlichen Materialien, welche weder essbar noch auflösend waren, beholfen.

Aufgabe der vorliegenden Erfindung ist es, eine während den Koch-, Dampf- oder Bratvorgängen wirkende Stabilitätshilfe bei einem labilen Objekt, insbesondere Lebensmittelgebilden zu schaffen, um den Zusammenhalt derselben zu gewährleisten und manuelle Entfernungsarbeiten zu vermeiden.

Die Erfindung löst diese Aufgabe mit einer Stabilitätshilfe, welche die Merkmale des Patentanspruches aufweist.

Die Stabilitätshilfe ist gebildet durch einen stabilen oder elastischen Bestandteil und hat die Gestalt einer Schnur, eines Stiftes, einer Nadel oder eines Clips, welches auf einem oder in einem labilen zu stabilisierenden Objekt angebracht wird. Der stützende Bestandteil kann aus ein- oder mehrstückigen Teilen bestehen.
Das Ausgangsmaterial aus dem die Stabilitätshilfe hergestellt ist, besteht zweckmässig aus einem leimartigen oder stärkehaltigen Material wie Gelatine, Glucose oder biologisch abbaubaren, essbaren Polymere, vorzugsweise eine polymeres, thermoplastisch verarbeitbares Granulat, das sich bei Erwärmung je nach der Zusammensetzung und Behandlung langsam oder rasch auflöst oder sich mit dem labilen Objekt integriert. Die Gelatine, Glucose, stärkehaltiges Material oder biologisch abbaubaren Polymere, kann normaler Art oder gehärtet sein und geeignete Zusatzstoffe enthalten.

Es ist bekannt, dass in neuster Zeit polymere, thermoplastisch verarbeitbare Stärkegranulate herstellbar sind. Ein solches Material ist hervorragend geeignet, um Stabilitätshilfen für Lebensmittel daraus zu fertigen. Der Bestandteil der Stabilitätshilfe, welcher am oder in das labile Objekt eingebracht oder angeklemmt wird, lässt sich auch stift- oder nadelförmig gestalten.

Bei schlauchartigen, Lebensmittel enthaltenden Gebilden ist es zweckmässig, deren Enden mit Clips zu verschliessen, die aus essbarem Material hergestellt sind, welches sich beim Kochen, Dämpfen oder Braten auflöst. Damit ist zumindest die Gefahr gebannt, welche die bisher meist verwendeten metallischen Clips bilden, wenn sie durch Unachtsamkeit mitgegessen werden.

## Patentansprüche

1. Stabilitätshilfe für ein labiles Lebensmittelgebilde zur Wahrung von dessen Formgebung bei der Zubereitung durch Kochen oder Braten, dadurch gekennzeichnet, dass die Stabilitätshilfe die Form einer Schnur, eines Stiftes, einer Nadel oder eines Clips aufweist, der oder die aus einem essbaren gelatine-, glucose- oder stärkehaltigen Material hergestellt ist, welches sich bei einer dem Koch- oder Bratvorgang entsprechenden Temperatur auflöst.

2. Stabilitätshilfe nach Anspruch 1, dadurch gekennzeichnet, dass das Ausgangsmaterial, aus dem die Stabilitätshilfe hergestellt ist, ein polymeres, thermoplastisch verarbeitbares Granulat auf Stärkebasis ist.

## Claims

1. Stabilizing aid for unstable foodstuff, which maintains the desired shape of the foodstuff during the cooking or roasting process, characterized in that the stabilizing aid has the form of a cord, a pin, a needle or a clip, which are made of an edible material based on gelatin, glucose or starch, which dissolves upon heating at a temperature corresponding to the cooking or roasting temperature.

2. Stabilizing aid in accordance with claim 1, characterized in that the stabilizing aid is made of a material, which is a polymeric, thermoplastically workable granulate based on starch.

## Revendications

1. Auxiliaire de stabilisation pour un produit alimentaire instable, destiné au maintien de la conformation de celui-ci lors de la préparation par cuisson ou rôtissage, caractérisé en ce que l'auxiliaire de stabilisation présente la forme d'un cordon, d'une tige, d'une aiguille ou d'un clip, qui est préparé à partir d'une matière consommable contenant de la gélatine, du glucose ou de l'amidon, qui se dissout à une température correspondant au processus de cuisson ou de rôtissage.

2. Auxiliaire de stabilisation selon la revendication 1, caractérisé en ce que la matière première à partir de laquelle est préparé l'auxiliaire de stabilisation est un granulé polymère, transformable par voie thermoplastique, à base d'amidon.
